# FASCICULE DE BREVET EUROPEEN

(11) **EP 1 963 238 B1**
(45) Date de publication et mention de la délivrance du brevet: **27.03.2019**
(21) Numéro de dépôt: 06847211.7
(22) Date de dépôt: 22.12.2006
(51) Int. Cl.: C03C 25/26, C03C 25/1025, B29C 71/02, C03C 25/47

(54) **FILS DE VERRE ET STRUCTURES DE FILS DE VERRE POURVUS D'UN REVETEMENT RENFERMANT DES NANOPARTICULES.**
GLASFASERN UND GLASFASERSTRUKTUREN MIT EINER BESCHICHTUNG AUS NANOPARTIKELN
GLASS FIBRES AND GLASS FIBRE STRUCTURES PROVIDED WITH A COATING CONTAINING NANOPARTICLES

(30) Priorité: 23.12.2005 FR 0554078
(43) Date de publication de la demande: 03.09.2008
(73) Titulaire: Saint-Gobain Adfors, 92400 Courbevoie (FR)
(72) Inventeur: MOIREAU, Patrick, 73190 Curienne (FR)
(74) Mandataire: Saint-Gobain Recherche
(86) Numéro de dépôt international: PCT/FR2006/051422
(87) Numéro de publication internationale: WO 2007/074311

(56) Documents cités:
- EP-A- 0 927 748
- EP-A- 1 160 277
- EP-A- 1 205 777
- EP-A- 1 235 088
- DD-A1- 90 983
- FR-A- 2 080 547
- US-A- 5 648 407
- US-A1- 2004 147 029
- US-A1- 2005 226 581
- US-B1- 6 911 258

## Description

La présente invention se rapporte à des fils de verre et des structures de fils de verre pourvus d'un revêtement contenant des nanoparticules, notamment d'argile ou de boehmite, destinés au renforcement de matières organiques et/ou inorganiques.

Elle concerne également les composites incorporant de tels fils et structures.

De manière classique, les fils de verre de renforcement sont élaborés par étirage mécanique de filets de verre fondu s'écoulant des multiples orifices d'une filière remplie de verre en fusion, par gravité sous l'effet de la pression hydrostatique liée à la hauteur du liquide, pour former des filaments qui sont revêtus d'un ensimage et rassemblés en fils de base, lesquels fils sont alors collectés sur un support approprié.

Les fils de verre sous leurs différentes formes (fils continus, coupés ou broyés, mats, grilles, tissus, tricots, ...) sont utilisés couramment pour renforcer efficacement des matrices de nature variée, par exemple des matières organiques thermoplastiques ou thermodurcissables, et des matières inorganiques, par exemple du ciment.

Bien que l'ensimage contribue dans une large mesure à protéger les filaments des agressions chimiques et environnementales, le niveau de protection du fil est le plus souvent insuffisant et doit être amélioré. Notamment, on cherche à augmenter la résistance au vieillissement des fils de verre qui sont inclus dans des matrices corrosives, par exemple des matières cimentaires, ou sont en contact avec des milieux aqueux ou contenant des solvants organiques.

Le brevet FR-A-2080547 décrit une composition d'agent de couplage dans le cadre d'une solution d'apprêtage pour fibres de verre (titre et page 2, lignes 7), qui comprend, en pourcentages pondéraux sur les matières solides, les composés suivants: 78 % d'acétate de polyvinyle, 7 % de méthacryloxypropyltriéthoxysilane, 8 % de particules de silice ayant un diamètre de 16 nm et 7 % d'un lubrifiant (page 12, exemple 2 et dans le tableau II la troisième ligne et page 10, exemple 1 pour la taille des particules). Cependant avant l'application de cette composition, les rovings sont nettoyés à chaud, le verre étant ainsi mis à nu.

La présente invention a pour but d'améliorer la résistance au vieillissement en milieu humide de fils de verre et de structures de fils de verre destinés notamment à être incorporés en tant qu'éléments de renforcement de matières organiques et/ou inorganiques.

Ce but est atteint selon l'invention par les fils de verre et les structures de fils de verre pourvus d'un revêtement (« coating » en anglais) à base d'un polymère qui contient des nanoparticules.

Plus précisément, l'invention a pour objet des fils de verre de renforcement et des structures de fils de verre de renforcement pourvus d'une composition de revêtement, obtenue à partir d'une solution et/ou d'une suspension et/ou d'une émulsion, qui comprend (en % en poids de matières solides) :
- 60 à 95 % d'au moins un polymère
- 2 à 18 % de nanoparticules à base d'argile ou de boehmite.

Dans la présente invention, par « nanoparticules » on entend des particules de matière formées d'un amas d'atomes ou de molécules, qui possèdent une ou plusieurs dimensions pouvant varier entre 1 et 100 nanomètres, de préférence entre 1 et 50 nanomètres. La forme de ces particules peut varier dans une très large mesure et par exemple avoir l'aspect d'une sphère, d'un tube, d'une aiguille (« whisker » en anglais), d'une écaille ou d'une plaquette.

Toujours dans le contexte de l'invention, par « fils » il faut entendre les fils de base issus du rassemblement d'une multitude de filaments, et les produits dérivés de ces fils, notamment les assemblages de ces fils de base en stratifils (« rovings » en anglais). De tels assemblages peuvent être obtenus en dévidant simultanément plusieurs enroulements de fils de base, puis en les rassemblant en mèches qui sont bobinées sur un support en rotation. Ce peut être également des stratifils « directs » de titre (ou masse linéique) équivalent à celui des stratifils assemblés, obtenus par le rassemblement de filaments directement sous la filière et l'enroulement sur un support en rotation.

Encore selon l'invention, on entend par « composition de revêtement » une composition apte à être déposée sur les fils et les structures de fils, et qui se présente sous la forme d'une solution et/ou d'une suspension et/ou d'une dispersion comprenant au moins 10 % en poids de solvant, de préférence au moins 25 % et au plus 85 %.

Enfin, par « solvant », on entend l'eau, les solvants organiques pouvant aider à solubiliser certains constituants de la composition de revêtement, et les mélanges d'eau et d'un ou plusieurs de ces solvants. A titre d'exemples de tels solvants, on peut citer les alcanes, les alcools, les cétones et les esters. Dans la majorité des cas, la composition ne contient pas de solvant organique, notamment pour limiter les émissions de composés organiques volatils (« Volatile Organic Compounds VOC » en anglais) dans l'atmosphère.

Le polymère conforme à l'invention confère la protection contre le vieillissement humide, donne au revêtement la cohésion mécanique nécessaire en faisant adhérer les nanoparticules au fil de verre et en liant les nanoparticules entre elles, et permet d'assurer la liaison avec la matière à renforcer.

Le choix du polymère dépend de l'application visée. En règle générale, le polymère est un polymère organique par exemple un polyalcool vinylique, un polyacétate de vinyle (homopolymère ou copolymère tel qu'un copolymère d'acétate de vinyle et d'éthylène), un polychlorure de vinyle, un polymère styrène-butadiène (SBR) ou nitrile-butadiène (NBR), ou un polymère acrylique. De préférence, le polymère est un polyalcool vinylique, un polymère SBR ou un polyacrylique.

De préférence, le polymère représente 75 à 90 % du poids de la composition de revêtement.

Les nanoparticules sont essentielles au revêtement car elles permettent d'obtenir un effet barrière à l'eau et aux solvants organiques qui se traduit par une plus grande aptitude du fil à résister au vieillissement dans un milieu humide. En effet, les nanoparticules sont des obstacles qui s'opposent à la pénétration rapide de ces composés en créant dans le revêtement des chemins de diffusion tortueux vers le verre qui est ainsi mieux protégé. Le degré de protection varie en fonction de la quantité et de la forme des nanoparticules dans le revêtement.

Des particules de dimensions variées peuvent donner les effets précités. A cet égard, les nanoparticules présentant un rapport d'aspect élevé (rapport de la dimension la plus grande à la dimension la plus petite) telles que des plaquettes sont particulièrement adaptées car elles sont susceptibles de s'orienter parallèlement à la surface des filaments, ce qui confère au fil une plus grande résistance au vieillissement en milieu humide.

Les nanoparticules conformes à l'invention sont composées d'une matière minérale, à savoir qu'elles contiennent plus de 30 % en poids d'une telle matière, de préférence plus de 40 %, et avantageusement plus de 45 %.

Les nanoparticules sont à base d'argile ou de boehmite.

Le terme « argile » est ici à considérer dans sa définition générale acceptée par l'homme du métier, à savoir qu'il définit des aluminosilicates hydratés de formule générale Al₂O₃.SiO₂.xH₂O, où x est le degré d'hydratation. Une telle argile est constituée de feuillets d'aluminosilicate ayant une épaisseur de quelques nanomètres reliés les uns aux autres par des liaisons de type hydrogène ou ioniques entre les groupes hydroxydes présents sur les feuillets et l'eau et/ou les cations présents entre lesdits feuillets.

A titre d'exemples on peut citer les phyllosilicates de type mica, tels que les smectites, la montmorillonite, l'hectorite, les bentonites, la nontronite, la beidellite, la volonskoite, la saponite, la sauconite, la magadiite, la vermiculite, le mica, la kenyaite et les hectorites synthétiques.

De préférence, l'argile est choisie parmi les phyllosilicates de type 2:1, avantageusement les smectites. L'argile particulièrement préférée est la montmorillonite.

L'argile peut être une argile calcinée, par exemple ayant subi un traitement thermique à une température d'au moins 750°C.

L'argile peut également être une argile modifiée, par exemple par échange cationique en présence d'une solution d'un sel d'ammonium, de phosphonium, de pyridinium ou d'imidazolium, de préférence un sel d'ammonium.

Les nanoparticules d'argile se présentent généralement sous la forme de plaquettes ayant une épaisseur de quelques nanomètres et une longueur pouvant atteindre 1 micromètre, en général inférieure à 100 nanomètres, ces plaquettes pouvant être individualisées ou agrégées.

Les nanoparticules d'argile peuvent être obtenues en soumettant une argile, éventuellement calcinée et/ou modifiée comme mentionné ci-dessus, à l'action d'au moins un agent d'expansion qui a pour rôle de d'écarter les feuillets de l'argile. Par exemple, l'agent d'expansion peut être le tétrahydrofurane ou un alcool tel que l'éthanol, l'isopropanol, l'éthylène glycol, le 1,3-propanediol, le 1,4-butanediol et les polyéthylène glycols, notamment de masse moléculaire inférieure à 1200.

Le terme « boehmite » se rapporte à des monohydrates d'alumine. De préférence, la boehmite est une boehmite synthétique obtenue par réaction hydrothermale à partir d'hydroxyde d'aluminium.

Les nanoparticules de boehmite peuvent être sous la forme de billes, d'aiguilles, d'élipsoïdes ou de plaquettes, cette dernière forme étant préférée.

De manière avantageuse, les nanoparticules sont traitées par un agent qui aide à ralentir la diffusion de l'eau et permet ainsi d'accroître la résistance au vieillissement du fil en milieu humide, de préférence un agent hydrophobe.

Les procédés permettant de rendre des particules hydrophobes sont connus.

Par exemple, on peut faire réagir les nanoparticules avec un composé de formule RₐXY₄₋ₐ en présence d'eau et d'un acide, formule dans laquelle :
R représente un atome d'hydrogène ou un radical hydrocarboné renfermant 1 à 40 atomes de carbone, ledit radical pouvant être linéaire, ramifié ou cyclique, saturé ou insaturé, pouvant contenir un ou plusieurs hétéroatomes O ou N ou être substitué par un ou plusieurs groupes amino, acide carboxylique, epoxy ou amido, et les groupements R étant identiques ou différents
X représente Si, Zr ou Ti
Y est un groupe hydrolysable tel qu'un alkoxy contenant 1 à 12 atomes de carbone, éventuellement contenant un ou plusieurs hétéroatomes O ou N, ou un halogène, de préférence Cl,
a est égal à 1, 2 ou 3.

De préférence, le composé répondant à la formule précitée est un organosilane, avantageusement un organosilane renfermant deux ou trois groupes alcoxy.

A titre d'exemples, on peut citer le gamma-aminopropyltriméthoxysilane, le gamma-aminopropyltriéthoxysilane, le N-phényl-gamma-aminopropyltriméthoxysilane, le N-styrylaminoéthyl-gamma-aminopropyltriméthoxysilane, le gamma-glycidoxypropyltriméthoxysilane, le gamma-méthacryloxypropyltriméthoxysilane, le gamma-acryloxypropyltriméthoxysilane, le vinyltriméthoxysilane, le vinyltriéthoxysilane, le terbutylcarbamoyl-propyltriméthoxysilane et les gamma-(polyalkylèneoxyde)propyltriméthoxysilanes.

De préférence, on choisit le gamma-aminopropyltriéthoxysilane, le N-phényl-gamma-aminopropyltriméthoxysilane, le N-styrylaminoéthyl-gamma-aminopropyltriméthoxysilane, le gamma-glycidoxypropyltriméthoxysilane et le gamma-méthacryloxypropyltriméthoxysilane.

L'agent de greffage est ajouté en une quantité représentant 15 à 75 % en poids des nanoparticules de départ, de préférence 30 à 70 %.

De préférence, les nanoparticules représentent 2,5 à 15 % du poids de la composition de revêtement.

En plus des constituants précités qui participent essentiellement à la structure du revêtement, un ou plusieurs autres constituants peuvent être présents.

On peut ainsi introduire un agent plastifiant qui permet d'abaisser la température de transition vitreuse du polymère, ce qui donne de la souplesse au revêtement et permet de limiter le retrait après le séchage. La quantité d'agent plastifiant représente de préférence 5 à 25 % en poids de la composition de revêtement.

Le revêtement peut comprendre un agent dispersant qui aide à la dispersion des nanoparticules et favorise la compatibilité entre les autres constituants et l'eau.

L'agent dispersant peut être choisi parmi :
> les composés organiques, notamment
   - les composés polyalkoxylés, aliphatiques ou aromatiques, éventuellement halogénés, tels que les alkyphénols éthoxylés/propoxylés, de préférence renfermant 1 à 30 groupes oxyde d'éthylène et 0 à 15 groupes oxyde de propylène, les bisphénols éthoxylés/propoxylés, de préférence renfermant 1 à 40 groupes oxyde d'éthylène et 0 à 20 groupes oxyde de propylène, les alcools gras éthoxylés/propoxylés, de préférence dont la chaîne alkyle comprend 8 à 20 atomes de carbone et renfermant 2 à 50 groupes oxyde d'éthylène et jusqu'à 20 groupes oxyde de propylène. Ces composés polyalkoxylés peuvent être des copolymères blocs ou statistiques,
   - les esters d'acide gras polyalkoxylés, par exemple de polyéthylèneglycol, de préférence dont la chaîne alkyle comprend 8 à 20 atomes de carbone et renfermant 2 à 50 groupes oxyde d'éthylène et jusqu'à 20 groupes oxyde de propylène,
   - les composés aminés, par exemple les amines, éventuellement alkoxylées, les oxydes d'amine, les alkylamides, les amido-amines, éventuellement alkylées et/ou alkoxylées, les succinates et les taurates de sodium, de potassium ou d'ammonium, les dérivés de sucres notamment du sorbitan, les alkylsulfates, les alkylphosphates et les éther phosphates de sodium, de potassium ou d'ammonium.
> Les composés inorganiques, par exemple des dérivés de la silice, ces composés pouvant être utilisés seuls ou en mélange avec les composés organiques précités.

De manière à éviter les problèmes de stabilité de la composition de revêtement et de dispersion inhomogène des nanoparticules, on préfère utiliser des tensioactifs cationiques ou non ioniques.

De préférence, la quantité d'agent dispersant représente 0,01 à 60 % du poids des nanoparticules, de préférence 0,25 à 50 %.

On peut encore introduire un agent régulateur de viscosité qui permet d'ajuster la viscosité de la composition aux conditions d'application sur les fils, laquelle viscosité est en général comprise entre 50 et 2000 mPa.s, de préférence au moins égale à 150 mPa.s. Cet agent permet également d'adapter la viscosité des dispersions de nanoparticules en vue de permettre leur traitement dans des conditions de cisaillement élevée pour améliorer leur état de dispersion et/ou d'exfoliation comme explicité dans la suite du texte.

L'agent régulateur de viscosité est choisi parmi les polyvinylalcools, les polyvinylpyrrolidones, les hydroxyméthylcelluloses, les carboxyméthylcelluloses et les polyéthylèneglycols.

La quantité d'agent régulateur de viscosité dans le revêtement est de préférence comprise entre 0,5 et 25 %, et avantageusement entre 1,5 et 18 %.

Le revêtement peut encore comprendre :
- 0,2 à 20 % en poids, de préférence 0,1 à 10 %, d'un agent lubrifiant, par exemple une huile minérale, un ester d'acide gras tel que le palmitate d'isopropyle ou le stéarate de butyle, une alkylamine ou une cire de polyéthylène,
- 0,25 à 20 % en poids, de préférence 0,5 à 15 %, d'un agent complexant tel qu'un dérivé de l'EDTA, de l'acide gallique ou de l'acide phosphonique, et
- 0,05 à 3 % en poids, de préférence 0,1 à 2 %, d'un agent antimousse tel qu'un silicone, un polyol ou une huile végétale.

L'ensemble des composés cités ci-dessus concourent à l'obtention de fils de verre et de structures de fils de verre qui peuvent être fabriqués facilement, peuvent être utilisés tels quels ou comme renforts, s'incorporent sans problème à une résine lors de la fabrication des composites et de surcroît ont une résistance élevée au vieillissement en milieu humide.

En règle générale, la quantité de revêtement représente 8 à 200 % du poids du fil final ou de la structure de fils finale, de préférence 15 à 100 %, et le plus souvent 20 à 60 %.

Le fil pourvu du revêtement conforme à l'invention peut être en verre de toute sorte, par exemple E, C, R, AR et à taux de bore réduit (inférieur à 6 %). Les verres E et AR sont préférés.

Le diamètre des filaments de verre constituant les fils peut varier dans une large mesure, par exemple 5 à 30 µm. De la même manière, de larges variations peuvent survenir dans la masse linéique du fil qui peut aller de 11 à 4800 tex selon les applications visées.

La composition de revêtement apte à être déposée sur les fils de verre et les structures de fils de verre comprend les constituants cités précédemment et un solvant.

La composition de revêtement comprend (en % en poids) :
- 8 à 90 % d'au moins un polymère, de préférence 10 à 75 %
- 1 à 15 % de nanoparticules, de préférence 1,5 à 10 %
- 0 à 10 % d'au moins un agent lubrifiant, de préférence 0,1 à 6 %
- 0 à 15 % d'au moins un agent dispersant, de préférence 0,1 à 8 %
- 0 à 15 % d'au moins un agent régulateur de viscosité, de préférence 0,1 à 8 %.

La quantité de solvant à utiliser est déterminée de manière à obtenir une teneur en solides (extrait sec) qui varie de 8 à 90 %, de préférence de 15 à 75 %.

La préparation de la composition de revêtement est effectuée de la manière suivante :
a) on disperse les nanoparticules dans le solvant, de préférence en présence d'un agent dispersant, le cas échéant d'un agent régulateur de la viscosité, et
b) on ajoute le polymère et les constituants optionnels précités dans la dispersion de nanoparticules.

Avantageusement, l'étape a) est effectuée sous une agitation suffisante pour éviter la sédimentation des nanoparticules.

La dispersion de nanoparticules à base d'un matériau en feuillets tels que l'argile ou la boehmite, peut être obtenue de différentes manières, toutes ayant pour but d'accroître le niveau de dispersion et/ou d'exfoliation du matériau.

Selon un premier mode de réalisation, les nanoparticules sont introduites dans le solvant contenant un agent dispersant et le mélange est traité dans des conditions de cisaillement important, par exemple dans un dispositif Ultraturax®, et/ou est soumis à l'action d'ultrasons.

A titre d'indication, une bonne dispersion des nanoparticules est obtenue en traitant le mélange dans un Ultraturax® à une vitesse de 3000 à 10000 rpm pendant 5 à 30 minutes ou par des ultrasons à une puissance de 200 W et une fréquence de 20 kHz pendant 15 à 120 minutes.

De manière avantageuse, un agent de régulation de la viscosité est introduit dans le mélange avant le traitement, en particulier lorsqu'il s'agit de cisailler les nanoparticules.

Le cas échéant, une partie du polymère de l'étape b) peut être ajouté à la dispersion avant le traitement de cisaillement, ce qui permet de réduire la quantité d'agent dispersant et éventuellement d'effectuer un ajustement plus adapté de la viscosité.

Selon un deuxième mode de réalisation, les nanoparticules sont mélangées avec des granulés d'un polymère thermoplastique tel qu'un polyacétate de vinyle, un polyamide et un polyuréthane, ou thermodurcissable tel qu'une résine epoxy, phénolique ou acrylique, et un polyuréthane, et le mélange est introduit dans une extrudeuse. Les extrudats sont ensuite mis en émulsion dans le solvant dans les conditions connues de l'homme du métier.

L'application du revêtement sur le fil de verre de renforcement et la structure de tels fils de verre peut être effectuée par tout moyen connu.

Ce moyen peut consister à projeter la composition de revêtement sur le fil, ou à immerger le fil dans un bain de la composition de revêtement et le faire passer en sortie du bain dans une buse calibrante qui permet de régler la quantité à déposer sur le fil.

Dans le cas d'une structure de fils, notamment une grille ou un tissu, on peut appliquer la composition de revêtement par pulvérisation, par immersion dans un bain de ladite composition suivie généralement d'une opération de calandrage, ou par passage de la structure sur un dispositif opérant par léchage, par exemple au moyen d'une lame calibrante qui fixe l'épaisseur du revêtement.

Le solvant est usuellement évacué par séchage du fil et de la structure de fils avant leur collecte sous forme d'enroulement, par exemple par voie thermique au moyen d'air chaud ou par contact avec un (des) rouleau(x) sécheur(s), ou par un traitement sous rayonnement infrarouge.

Le fil ou la structure de fils pourvu(e) du revêtement ainsi obtenu(e) peut subir une opération de revêtement supplémentaire avec une composition de revêtement identique ou différente de la précédente, notamment pouvant comporter ou non des nanoparticules.

L'invention a encore pour objet un matériau composite qui comprend au moins une matière organique et/ou inorganique et des fils de verre ou une (des) structure(s) de fils de verre de renfort, lesdits fils ou ladite(lesdites) structure(s) étant constitués pour tout ou partie de fils de verre ou de structure(s) de fils de verre pourvus de la composition de revêtement conformes à l'invention. La matière organique peut être constituée d'un ou plusieurs polymères thermoplastiques ou thermodurcissables, et la matière inorganique peut être par exemple une matière cimentaire, du plâtre ou un mortier, notamment contenu dans les assemblages pour revêtement de façade.

Le taux de verre au sein du matériau composite est généralement compris entre 0,5 et 75 % en poids, de préférence 5 à 50 %.

Les exemples donnés ci-après permettent d'illustrer l'invention sans toutefois la limiter.

Dans les exemples, on utilise les matières premières suivantes pour la préparation des compositions de revêtement et des compositions d'ensimage :
- polymère (revêtement)
   ▪ polyalcool vinylique (taux d'hydrolyse : 98 %), commercialisé sous la référence « CELVOL® 325 » par la société VINAMUL ; teneur en matières solides : 97,5 %
   ▪ styrene butadiene rubber (SBR), commercialisé sous la référence « STYRONAL® D517 » par la société BASF ; teneur en matières solides : 50%
- agent réticulant (revêtement)
   ▪ polyamide epoxy, commercialisé sous la référence « POLYCUP® 172LX » par la société HERCULES ; teneur en matières solides : 13,5 %
- agents filmogènes (ensimage)
   ▪ résine epoxy bisphénol A; commercialisée sous la référence « EPIREZ® 3510 W 60 » par la société RESOLUTION ; teneur en matières solides : 60%
   ▪ mélange de résine epoxy bisphénol A et de 1-méthoxy-2-propanol, commercialisé sous la référence « NEOXIL® 962D » par la société DSM ; teneur en matières solides : 40 %
   ▪ ETS4 : mélange contenant 30,7 % en poids de résine epoxy bisphénol A (commercialisé sous la référence « ARALDITE CY 207 » par la société HUNTSMAN) et 10 % en poids de résine polyester (commercialisée sous la référence « NORSODYNE So56 » par la société CRAY VALLEY); teneur en matières solides : 64 %

- nanoparticules
   ▪ argile A : montmorillonite modifiée par échange ionique avec un ammonium quaternaire, commercialisée sous la référence « Dellite® 67G » par la société LAVIOSA CHIMICA MINERARIA; teneur en matières solides : 100 %
   ▪ argile B : montmorillonite modifiée par échange ionique avec un ammonium quaternaire (commercialisée sous la référence « Dellite® 67G » par la société LAVIOSA CHIMICA MINERARIA) traitée en dispersion dans l'eau avec le N-styrylaminoéthyl-gamma-aminopropyltriméthoxysilane (commercialisé sous la référence « SILQUEST A-1128 » par la société GE SILICONES) ; teneur en matières solides : 100 %
   ▪ argile C : montmorillonite modifiée par échange ionique avec un ammonium quaternaire (commercialisée sous la référence « Dellite® 67G » par la société LAVIOSA CHIMICA MINERARIA) traitée en dispersion dans de l'éthylène glycol avec le N-styrylaminoéthyl-gamma-aminopropyltriméthoxysilane (commercialisé sous la référence « SILQUEST A-1128 » par la société GE SILICONES) ; teneur en matières solides : 100 %
   ▪ argile D : montmorillonite modifiée par échange ionique avec un ammonium quaternaire (commercialisée sous la référence « Dellite® 67G » par la société LAVIOSA CHIMICA MINERARIA) traitée en dispersion dans du PEG 300 avec le N-styrylaminoéthyl-gamma-aminopropyltriméthoxysilane (commercialisé sous la référence « SILQUEST A-1128 » par la société GE SILICONES) ; teneur en matières solides : 100 %
   ▪ argile E : montmorillonite (commercialisée sous la référence « Dellite® HPS » par la société LAVIOSA CHIMICA MINERARIA) traitée en dispersion dans du PEG 300 avec le N-styrylaminoéthyl-gamma-aminopropyltriméthoxysilane (commercialisé sous la référence « SILQUEST A-1128 » par la société GE SILICONES) ; teneur en matières solides : 100 %
   ▪ boehmite en plaquettes obtenue par synthèse hydrothermale à partir d'hydroxyalumine
      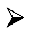 Boehmite A: particules de dimension inférieure à 50 nm ; teneur en matières solides : 28 %
      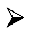 Boehmite B: modifiée par le gamma-aminopropyltriéthoxysilane (commercialisé sous la référence « SILQUEST® A-1100 » par la société GE SILICONES) dans l'acide formique ; 1 % du poids des nanoparticules ; teneur en matières solides : 25 %
      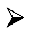 Boehmite C: modifiée par le gamma-aminopropyltriéthoxysilane (commercialisé sous la référence « SILQUEST® A-1100 » par la société GE SILICONES) ; 2 % du poids des nanoparticules ; teneur en matières solides : 100 %
      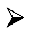 Boehmite D : modifiée par le gamma-méthacryloxypropyltriméthoxysilane (commercialisé sous la référence « SILQUEST® A-174 » par la société GE SILICONES) ; 1 % du poids des nanoparticules ; teneur en matières solides : 100 %
- agents de couplage (ensimage)
   ▪ gamma-méthacryloxypropyltriéthoxysilane, commercialisé sous la référence « SILQUEST® A-174NT » par la société GE SILICONES; teneur en matières solides : 80 %. Le composé est préalablement hydrolysé en présence d'acide acétique
   ▪ polyazamide silylé, commercialisé sous la référence « SILQUEST® A-1387 » par la société GE SILICONES ; teneur en matières solides : 50 %.
- plastifiant
   ▪ alcools gras éthoxylés, commercialisés sous la référence « SETILON® KN » par la société COGNIS ; teneur en matières solides : 57 %
   ▪ copolymère éthylène-acétate de vinyle, commercialisé sous la référence « MOWILITH® 1871 » par la société VINAMUL; teneur en matières solides : 53 %
- agent de régulation de la viscosité
   hydroxyéthylcellulose, commercialisé sous la référence « NATROSOL® 250 HBR » par la société AQUALON ; teneur en matières solides : 100 %
- agents dispersants et agents lubrifiants
   ▪ alkylamido-amine, commercialisée sous la référence « SODAMINE® P 45 » par la société ARKEMA ; teneur en matières solides : 100 %
   ▪ mélange de polyéthers phosphates commercialisé sous la référence « TEGO DISPERS® 651 » par la société DEGUSSA ; teneur en matières solides : 30 %
   ▪ mélange d'alcool ethoxylé et d'esters de glycérol, commercialisé sous la référence « TEXLUBE® NI/CS2 » par la société ACHITEX; teneur en matières solides : 100 %
   ▪ acétate d'alkylamido-amine, commercialisé sous la référence « CATIONIC SOFTENER FLAKES® » par la société GOLDSCHMIDT; teneur en matières solides : 100 %
   ▪ cire de polyéthylène modifiée, commercialisée sous la référence « HYDROCER® 145 » par la société SHAMROCK; teneur en matières solides : 50 %
- agent antimousse
   ▪polyéther, commercialisé sous la référence « TEGO FOAMEX® 830 » par la société DEGUSSA ; teneur en matières solides : 100 %

Dans ces exemples, la contrainte à la rupture en traction du fil est mesurée après un traitement de vieillissement humide dans une enceinte saturée en vapeur d'eau à 80°C.

### EXEMPLES 1 A 7

Ces exemples illustrent des fils de verre revêtus de compositions de revêtement contenant des nanoparticules d'argile.

Les compositions de revêtement contiennent les matières premières figurant dans le Tableau 1 (en % en poids).

Les compositions sont préparées dans les conditions suivantes :
On disperse le polyalcool vinylique (CELVOL® 325) dans de l'eau à la température ambiante (20-25°C) sous agitation, puis on chauffe la dispersion à 80°C jusqu'à obtention d'une solution.

On disperse les nanoparticules dans de l'eau contenant l'agent antimousse (TEGO FOAMEX® 830) et l'agent lubrifiant (HYDROCER® 145)), puis on traite la dispersion dans un Ultraturax® (5 minutes à 9000 rpm/min).

On ajoute la dispersion ainsi obtenue à la première dispersion, puis on introduit l'agent plastifiant (MOWILITH® 1871) et l'agent réticulant (POLYCUP® 172LX) sous agitation vigoureuse pendant au moins 30 minutes. La viscosité de la dispersion est comprise entre 300 et 800 mPa.s pour permettre une application correcte sur le fil. Si nécessaire, la viscosité peut être ajustée en ajoutant de l'eau dans la dispersion.

La composition de revêtement est appliquée sur un fil constitué de filaments de verre E de 13 µm diamètre (300 tex), dévidé à partir d'un enroulement sous la forme d'un gâteau par, immersion dans un bain de ladite composition et passage sur une buse de calibration (perte au feu : 12 à 18 %).

Les fils utilisés sont revêtus d'une composition d'ensimage de base et d'une composition de revêtement exempte de nanoparticules (exemple 1) ou contenant des nanoparticules (exemples 2 à 7) dans les teneurs indiquées ci-après, exprimées en % en poids :

### Composition d'ensimage de base :

| | |
|---|---|
| EPIREZ® 3510 W 60 | 4,00 |
| SILQUEST® A-174 | 0,45 |
| SILQUEST® A-1387 | 0,20 |
| NATROSOL® 250 HBR | 0,20 |
| NEOXIL® 962D | 2,50 |
| SETILON® KN | 0,10 |
| TEXLUBE® NICS2 | 0,30 |
| Eau qsp 100 % | |

### Nanoparticules

| | Ex. 1 (comp.) | Ex. 2 | Ex. 3 | Ex. 4 | Ex. 5 | Ex. 6 | Ex. 7 |
|---|---|---|---|---|---|---|---|
| Argile | - | A | B | C | D | E | A |
| Taux (%) | - | 0,24 | 0,24 | 0,24 | 0,24 | 0,24 | 0,72 |

La résistance à la rupture des fils de verre revêtus de la composition revêtement testés dans les conditions de vieillissement humide est donnée dans le tableau 1.

**Tableau 1**

| | **Ex. 1 (comp.)** | **Ex. 2** | **Ex. 3** | **Ex. 4** | **Ex. 5** | **Ex. 6** | **Ex. 7** |
|---|---|---|---|---|---|---|---|
| CELVOL® 325 | 12,00 | 12,00 | 12,00 | 12,00 | 12,00 | 12,00 | 12,00 |
| POLYCUP® 172LX | 1,85 | 1,85 | 1,85 | 1,85 | 1,85 | 1,85 | 1,85 |
| MOWILITH® 1871 | 3,23 | 3,23 | 3,23 | 3,23 | 3,23 | 3,23 | 3,23 |
| HYDROCER®145 | 0,30 | 0,30 | 0,30 | 0,30 | 0,30 | 0,30 | 0,30 |
| TEGO FOAMEX®830 | 0,20 | 0,20 | 0,20 | 0,20 | 0,20 | 0,20 | 0,20 |
| Argile A | - | 0,74 | - | - | - | - | 2,22 |
| Argile B | - | - | 0,74- | - | - | - | - |
| Argile C | - | - | - | 0,74- | - | - | - |
| Argile D | - | - | - | - | 0,74- | - | - |
| Argile E | - | - | | | | 0,74 | - |
| Eau qsp 100 | | | | | | | |

| **Contrainte à la rupture (Mpa)** | | | | | | | |
|---|---|---|---|---|---|---|---|
| 0 jour | 1540,04 | 1354,53 | 1389,42 | 1259,87 | 1249,66 | 1325,79 | 1338,02 |
| 3 jours | 1448,46 | 1374,53 | 1247,75 | 1401,70 | 1329,04 | 1370,23 | 1229,14 |
| 14 jours | 924,64 | 1309,63 | 1415,82 | 1314,74 | 1286,35 | 1347,38 | 1077,27 |
| Variation (%) | - | + 41,6 | + 53,1 | + 42,1 | + 39,1 | + 45,7 | + 16,5 |

Par rapport à l'exemple 1 ne contenant pas de nanoparticules, les fils des exemples 2 à 7 selon l'invention présentent une meilleure résistance au vieillissement humide caractérisée par une contrainte à la rupture très supérieure après 3 jours et 14 jours.

Les fils contenant des nanoparticules greffées avec un silane présentent une résistance au vieillissement particulièrement élevée après 14 jours avec une amélioration de 39,1 % (exemple 5) à 53,2 % (exemple 3) par rapport au fil exempt de nanoparticules.

Le fil de l'exemple 7 contenant une teneur plus élevée en nanoparticules que le fil de l'exemple 2 présente une moins bonne résistance au vieillissement tout en étant meilleure que pour le fil de l'exemple 1 sans nanoparticules.

### EXEMPLES 8 A 15

Ces exemples illustrent des fils de verre revêtus de compositions de revêtement contenant des nanoparticules de boehmite.

Les compositions de revêtement contiennent les matières premières figurant dans le Tableau 2 (en % en poids).

Ces compositions sont préparées dans les conditions suivantes :
On verse les nanoparticules de boehmite dans un mélange de l'agent dispersant (TEGO DISPERS® 651) et de l'agent antimousse (TEGO FOAMEX® 830), puis on ajoute une partie du polymère (STYRONAL® 517), et on traite le mélange dans un Ultraturax® (30 minutes à 5000 rpm/min). On ajoute ensuite l'autre partie du polymère et on traite à nouveau dans l'Ultraturax® (5 minutes à 5000 rpm/min). La viscosité de la dispersion est comprise entre 300 et 800 mPa.s pour permettre une application correcte sur le fil. Si nécessaire, la viscosité peut être ajustée en ajoutant de l'eau dans la dispersion.

La composition de revêtement est appliquée sur un fil constitué de filaments de verre E de 13 µm diamètre (300 tex), dévidé à partir d'un enroulement sous la forme d'un gâteau, par immersion dans un bain de ladite composition et passage sur une buse de calibration (perte au feu 30 à 40 %).

Les fils A et B sont revêtus de la composition d'ensimage suivante (en % en poids) :

| | Fil A | Fil B |
|---|---|---|
| SODAMINE® P 45 | 0,07 | 0,07 |
| Boehmite C | - | 0,34 |
| SILQUEST® A-174NT | 0,21 | 0,21 |
| SILQUEST® A-1387 | 0,28 | 0,28 |
| CATIONIC SOFTENER FLAKES® | 0,11 | 0,11 |
| ETS4 | 5,04 | 5,04 |
| Eau qsp 100 | | |

La résistance à la rupture des fils de verre revêtus de la composition revêtement testés dans les conditions de vieillissement humide est donnée dans le tableau 2.

Les fils revêtus d'un ensimage et d'une composition de revêtement contenant des nanoparticules (exemples 12 à 15) présentent une meilleure résistance au vieillissement humide que les fils dans lequel l'ensimage ne contient pas de nanoparticules (exemples 8 à 11).

**TABLEAU 2**

| | **Ex. 8** | **Ex. 9** | **Ex. 10** | **Ex. 11** | **Ex. 12** | **Ex. 13** | **Ex. 14** | **Ex. 15** |
|---|---|---|---|---|---|---|---|---|
| Fil | A | A | A | A | B | B | B | B |
| STYRONAL® 517 | 66,65 | 66,65 | 66,65 | 66,65 | 66,65 | 66,65 | 66,65 | 66,65 |
| TEGO DISPERS® 651 | 1,65 | 1,65 | 1,65 | 1,65 | 1,65 | 1,65 | 1,65 | 1,65 |
| TEGO FOAMEX®830 | 0,38 | 0,38 | 0,38 | 0,30 | 0,38 | 0,38 | 0,38 | 0,38 |
| Boehmite A | 13,57 | - | - | - | 13,57 | - | - | - |
| Boehmite B | - | 15,40 | - | - | - | 15,40 | - | - |
| Boehmite C | - | - | 3,80 | - | - | - | 3,80 | - |
| Boehmite D | - | - | - | 3,80 | - | - | - | 3,80 |
| Eau qsp 100 | | | | | | | | |

| **Contrainte à la rupture (Mpa)** | | | | | | | | |
|---|---|---|---|---|---|---|---|---|
| 0 jour | 1601,2 | 1820,4 | 1645,4 | 1740,6 | 1762,8 | 1764,0 | 1484,6 | 1680,7 |
| 3 jours | 1191,6 | 1734,7 | 1454,8 | 1540,2 | 1733,3 | 1843,95 | 1743,7 | 1766,3 |
| 14 jours | 1506,1 | 1894,2 | 1737,8 | 1785,9 | 1944,5 | 2033,65 | 1922,0 | 2000,9 |
| 30 jours | 1314,5 | 1655,0 | 1498,7 | 1502,5 | 1501,9 | 1601,9 | 1538,6 | 1605,8 |
| 60 jours | 1120,6 | 1380,5 | 1230,2 | 1265,7 | 1336,8 | 1541,4 | 1467,6 | 1613,7 |

## Revendications

1. Fil de verre de renforcement composé de filaments de verre revêtus d'un ensimage ou structure de tels fils, caractérisé(e) en ce qu'il(qu'elle) est pourvu(e) d'une composition de revêtement, obtenue à partir d'une solution et/ou d'une suspension et/ou d'une émulsion, qui comprend (en % en poids de matières solides) :
- 60 à 95 % d'au moins un polymère
- 2 à 18 % de nanoparticules à base d'argile ou de boehmite.

2. Fil de verre ou structure de fil de verre selon la revendication 1, **caractérisé en ce que** le polymère est un polyalcool vinylique, un polyacétate de vinyle, un polychlorure de vinyle, un polymère styrène-butadiène (SBR) ou nitrile-butadiène (NBR), ou un polymère acrylique.

3. Fil de verre ou structure de fil de verre selon la revendication 1 ou 2, caractérisé(e) en ce que les nanoparticules sont traitées par un agent qui aide à ralentir la diffusion de l'eau, de préférence un agent hydrophobe.

4. Fil de verre ou structure de fil de verre selon la revendication 3, caractérisé(e) en ce que l'agent est un composé de formule RₐXY₄₋ₐ dans laquelle
R représente un atome d'hydrogène ou un radical hydrocarboné renfermant 1 à 40 atomes de carbone, ledit radical pouvant être linéaire, ramifié ou cyclique, saturé ou insaturé, pouvant contenir un ou plusieurs hétéroatomes O ou N ou être substitué par un ou plusieurs groupes amino, acide carboxylique, epoxy ou amido, et les groupements R étant identiques ou différents
X représente Si, Zr ou Ti
Y est un groupe hydrolysable tel qu'un alkoxy contenant 1 à 12 atomes de carbone, éventuellement contenant un ou plusieurs hétéroatomes O ou N, ou un halogène, de préférence Cl,
a est égal à 1, 2 ou 3.

5. Fil de verre ou structure de fil de verre selon la revendication 4, caractérisé(e) en ce que le composé est un organosilane, de préférence renfermant deux ou trois groupes alcoxy.

6. Fil de verre ou structure de fil de verre selon l'une des revendications 1 à 5, caractérisé(e) en ce que le polymère représente 75 à 90 % en poids de la composition de revêtement.

7. Fil de verre ou structure de fil de verre selon l'une des revendications 1 à 6, caractérisé(e) en ce que les nanoparticules représentent 2,5 à 15 % en poids de la composition de revêtement.

8. Fil de verre ou structure de fil de verre selon l'une des revendications 1 à 7, caractérisé(e) en ce que la composition de revêtement représente 8 à 200 % du poids du fil final ou de la structure de fils finale.

9. Composite comprenant au moins une matière organique et/ou inorganique et des fils de verre ou une (des) structure(s) de fils de verre de renfort, **caractérisé en ce que** lesdits fils ou ladite(lesdites) structure(s) sont constitués pour tout ou partie de fils de verre ou de structure(s) pourvus d'un revêtement selon l'une des revendications 1 à 8.

10. Composite selon la revendication 9, **caractérisé en ce qu'**il contient 0,5 à 75 % en poids de verre, de préférence 5 à 50 %.

## Patentansprüche

1. Verstärkende Glasfaser, bestehend aus Glasfilamenten, die mit einer Schlichte oder einer Struktur aus diesen Fasern beschichtet sind, **dadurch gekennzeichnet, dass** diese mit einer Beschichtungszusammensetzung versehen ist, die aus einer Lösung und/oder einer Suspension und/oder einer Emulsion erhalten wird, die umfasst (Feststoffgehalt in Gew.-%):
- 60 bis 95 % mindestens eines Polymers
- 2 bis 18 % Nanopartikel auf der Basis von Ton oder Böhmit.

2. Glasfaser oder Glasfaserstruktur nach Anspruch 1, **dadurch gekennzeichnet, dass** das Polymer ein Polyvinylalkohol, ein Polyvinylacetat, ein Polyvinylchlorid, ein Styrol-Butadien-Polymer (SBP) oder Nitril-Butadien-Polymer (NBP) oder ein Acrylpolymer ist.

3. Glasfaser oder Glasfaserstruktur nach Anspruch 1 oder 2, **dadurch gekennzeichnet, dass** die Nanopartikel mit einem Mittel, das zur Verlangsamung der Wasserdiffusion beiträgt, vorzugsweise einem hydrophoben Mittel, behandelt sind.

4. Glasfaser oder Glasfaserstruktur nach Anspruch 3, **dadurch gekennzeichnet, dass** das Mittel eine Verbindung der Formel RₐXY₄₋ₐ ist, wobei
R für ein Wasserstoffatom oder einen Kohlenwasserstoffrest mit 1 bis 40 Kohlenstoffatomen steht, wobei der Rest linear, verzweigt oder cyclisch, gesättigt oder ungesättigt sein oder ein oder mehrere Heteroatome O oder N enthalten oder durch eine oder mehrere Amino-, Carbonsäure-, Epoxy- oder Amidogruppen substituiert sein kann, und wobei die R-Gruppierungen identisch oder verschieden sind
X für Si, Zr oder Ti steht
Y eine hydrolisierbare Gruppe wie ein Alkoxy mit 1 bis 12 Kohlenstoffatomen, gegebenenfalls mit einem oder mehreren Heteroatomen O oder N oder einem Halogen, vorzugsweise Cl, ist,
a gleich 1, 2 oder 3 ist.

5. Glasfaser oder Glasfaserstruktur nach Anspruch 4, **dadurch gekennzeichnet, dass** die Verbindung ein Organosilan mit vorzugsweise zwei oder drei Alkoxygruppen ist.

6. Glasfaser oder Glasfaserstruktur nach einem der Ansprüche 1 bis 5, **dadurch gekennzeichnet, dass** das Polymer 75 bis 90 Gew.-% der Beschichtungszusammensetzung darstellt.

7. Glasfaser oder Glasfaserstruktur nach einem der Ansprüche 1 bis 6, **dadurch gekennzeichnet, dass** die Nanopartikel 2,5 bis 15 Gew.-% der Beschichtungszusammensetzung darstellen.

8. Glasfaser oder Glasfaserstruktur nach einem der Ansprüche 1 bis 7, **dadurch gekennzeichnet, dass** die Beschichtungszusammensetzung 8 bis 200 % des Gewichts der endgültigen Faser oder der endgültigen Faserstruktur darstellt.

9. Verbundwerkstoff, der mindestens einen organischen und/oder anorganischen Stoff und Glasfasern oder (eine) verstärkende Glasfaserstruktur(en) enthält, **dadurch gekennzeichnet, dass** die Fasern oder die Struktur(en) ganz oder teilweise aus Glasfaser oder (einer) Struktur(en) bestehen, die mit einer Beschichtung nach einem der Ansprüche 1 bis 8 versehen sind.

10. Verbundwerkstoff nach Anspruch 9, **dadurch gekennzeichnet, dass** er 0,5 bis 75 Gew.-% Glas, vorzugsweise 5 bis 50 %, enthält.

## Claims

1. A reinforcing glass strand composed of filaments that are coated with a size or a reinforcing glass strand structure, **characterized in that** it is equipped with a coating composition, obtained from a solution and/or a suspension and/or an emulsion that comprises (in % by weight of solids):
- 60 to 95% of at least one polymer;
- 2 to 18% of nanoparticles based on clay or boehmite.

2. The glass strand or glass strand structure as claimed in claim 1, **characterized in that** the polymer is a polyvinyl alcohol, a polyvinyl acetate, a polyvinyl chloride, a styrene-butadiene (SBR) or nitrile-butadiene (NBR) polymer or an acrylic polymer.

3. The glass strand or glass strand structure as claimed in claims 1 or 2, **characterized in that** the nanoparticles are treated by an agent that helps to slow down the diffusion of water, preferably a hydrophobic agent.

4. The glass strand or glass strand structure as claimed in claim 3, **characterized in that** the agent is a compound of formula RₐXY₄₋ₐ in which:
R represents a hydrogen atom or a hydrocarbon-based radical incorporating 1 to 40 carbon atoms, said radical possibly being linear, branched or cyclic, saturated or unsaturated, possibly containing one or more O or N hetero atoms or being substituted by one or more amino, carboxylic acid, epoxy or amido groups, and the R groups being identical or different;
X represents Si, Zr or Ti;
Y is a hydrolysable group such as an alkoxy containing 1 to 12 carbon atoms, optionally containing one or more O or N hetero atoms, or a halogen, preferably CI; and
a is equal to 1, 2 or 3.

5. The glass strand or glass strand structure as claimed in claim 4, **characterized in that** the compound is an organosilane, preferably incorporating two or three alkoxy groups.

6. The glass strand or glass strand structure as claimed in one of claims 1 to 5, **characterized in that** the polymer represents 75 to 90% by weight of the coating composition.

7. The glass strand or glass strand structure as claimed in one of claims 1 to 6, **characterized in that** the nanoparticles represent 2.5 to 15% by weight of the coating composition.

8. The glass strand or glass strand structure as claimed in one of claims 1 to 7, **characterized in that** the coating composition represents 8 to 200% of the weight of the final strand or of the final strand structure.

9. A composite comprising at least one organic and/or inorganic material and reinforcing glass strands or one or more reinforcing glass strand structures, **characterized in that** said strands or structure(s) are completely or partly made from glass strands or structure(s) equipped with a coating as claimed in one of claims 1 to 8.

10. The composite as claimed in claim 9, **characterized in that** it contains 0.5 to 75% by weight of glass, preferably 5 to 50%.
